# EUROPÄISCHE PATENTSCHRIFT

(11) **EP 1 180 317 B1**
(45) Veröffentlichungstag und Bekanntmachung des Hinweises auf die Patenterteilung: **07.02.2007**
(21) Anmeldenummer: 00922419.7
(22) Anmeldetag: 06.03.2000
(51) Int. Cl.: H04Q 11/04, H04J 3/07

(54) **VERFAHREN UND VORRICHTUNG ZUR KONTINUIERLICHEN DATENÜBERTRAGUNG**
METHOD AND APPARATUS FOR CONTINUOUS DATA TRANSMISSION
PROCEDE ET DISPOSITIF DE TRANSMISSION DE DONNEES CONTINUE

(30) Priorität: 04.03.1999 DE 19909586
(43) Veröffentlichungstag der Anmeldung: 20.02.2002
(73) Patentinhaber: Living Byte Software GmbH, 80935 München (DE)
(72) Erfinder: ZIRPEL, Michael, 80935 München (DE)
(74) Vertreter: Betten & Resch
(86) Internationale Anmeldenummer: PCT/DE2000/000700
(87) Internationale Veröffentlichungsnummer: WO 2000/052953

(56) Entgegenhaltungen:
- EP-A- 0 429 786
- WO-A-98/48590
- US-A- 5 309 438
- US-A- 5 680 422
- SLATTER R C ET AL: "CUSTOMER ACCESS TO INTEGRATED SERVICES DIGITAL NETWORKS" ELECTRICAL COMMUNICATION, ALCATEL, vol. 56, no. 1, 1981, pages 31-43, XP002053606 BRUSSELS, BE ISSN: 0013-4252
- HOMBURG D ET AL: "CENTRONICS-, RS-232-/V.24- UND SCSI-SCHNITTSTELLE" ELEKTRONIK, FRANZIS VERLAG GMBH, vol. 37, no. 24, 25 November 1988 (1988-11-25), pages 102-104, XP000026869 MUENCHEN, DE ISSN: 0013-5658

## Beschreibung

Die vorliegende Erfindung betrifft ein Verfahren und eine Vorrichtung zur Übertragung von Daten, insbesondere zum kontinuierlichen Übertragen der Daten über eine Leitung. Das Verfahren und die Vorrichtung eignen sich insbesondere für eine ISDN-Übertragung.

Die Anbindung einer Datenverarbeitungseinrichtung wie etwa eines PCs an eine ISDN-Leitung erfolgt entweder über Einsteckkarten, die im PC installiert werden, oder über externe Adapter, sogenannte Terminaladapter.

Heutzutage spielen unter den ISDN-Adaptem für PCs die externen Adapter, die im Gegensatz zu ISDN-Einsteckkarten leicht vom Endbenutzer installiert werden können, eine immer wichtigere Rolle. Diese Geräte werden über Standartschnittstellen, beispielsweise eine RS-232-Schnittstelle, eine IRDA-Schnittstelle, USB, oder auch über Ethernet an den PC angeschlossen.

Gleichzeitig besteht bei ISDN-Adaptern der Trend, immer mehr Funktionalitäten in die PC-Software zu verlagern. Dies ermöglicht eine immer kostengünstigere Entwicklung und Fertigung der ISDN-Adapter, ohne daß die PCs aufgrund ihrer heutzutage sehr leistungsfähigen CPUs nennenswert belastet werden.

Besonders einfache ISDN-Adapter stellen nur noch den synchronen Bit-Datenstrom (64000 Bit/s, Byte- bzw. 8 kHz-strukturiert) eines ISDN-B-Kanals zur Verfügung. Alle anderen Kommunikationsverfahren, wie etwa die HDLC-Rahmen-Erzeugung (und die auf HDLC-Rahmen basierenden Protokolle wie X.75, V.120, ...) und auch analoge Modulationsverfahren (wie z. B. V.17 für Fax und V.34 für Daten) werden in der PC-Software durchgeführt. Zwischen dem PC beziehungsweise dessen Software und dem ISDN-Adapter wird dagegen nur ein synchroner Bit-Datenstrom übertragen.

Hierbei besteht das grundsätzliche Problem, daß bei heutigen PC-Multitasking-Betriebssystemen wie Windows95/98/NT eine unterbrechungsfreie Arbeit der PC-Software nicht sichergestellt werden kann. Unterschiedliche Prozesse können die CPU kurzzeitig blockieren. Dadurch kann die kontinuierliche Erzeugung eines synchronen Datenstroms (64 kBit/s bzw. 8000 Byte/s) nicht sichergestellt werden. Wird die CPU kurzzeitig blockiert entsteht eine Lücke im Sendedatenstrom, der zu einem Übertragungsfehler führt. Im Regelfall werden diese Fehler durch Fehlersicherungsprotokolle auf höheren Ebenen wieder ausgeglichen (durch Wiederholung), allerdings bleibt dabei das Problem, daß bei häufigeren Fehlern die Übertragungsgeschwindigkeit erheblich absinkt oder gar die Kommunikation zum Erliegen kommt.

Dieses Problem verschärft sich, wenn die lokale Verbindung zwischen PC und Adapter ebenfalls nicht isochroner Natur ist und daher nicht garantiert werden kann, daß die Daten, die vom PC gesendet werden, rechtzeitig beim Adapter eintreffen. Dies ist besonders der Fall, wenn in der lokalen Verbindung Fehlersicherungprotokolle verwendet werden und/oder die lokale Verbindung von mehreren unterschiedlichen Geräten gleichzeitig genutzt wird, wie es z. B. bei Ethernet-Verbindungen (z. B. mit TCP/IP) oder USB der Fall sein kann. In diesem Fall werden nicht nur auf dem PC zeitliche Lücken erzeugt, sondern auch auf der nicht-isochronen lokalen Verbindungsstrecke.

Ein übliches Verfahren, diese Lücken im Datenstrom des ISDN-Kanals zu vermeiden, besteht darin, daß der PC mehr Daten als benötigt im voraus an den Adapter versendet, um einen Pufferspeicher im Adapter so gefüllt zu halten, daß dieser kurze Lücken im Sendedatenstrom überbrücken kann.

Dieses Verfahren überbrückt zwar die Lücken beim Senden, ist jedoch mit dem Nachteil verbunden, daß die im voraus gesendeten Daten auf der Nutzdatenebene die Verzögerung zwischen Sendedaten und empfangenen Antwortdaten erhöhen. In der jeweiligen Implementation müssen Zuverlässigkeit der Datenübertragung (d.h. Wahrscheinlichkeit von Lücken) und die Antwortzeit (d.h. Verzögerung durch Senden im Voraus) gegeneinander abgewogen werden und ein praktikabler Kompromiß gesucht werden.

EP-A-0 429 786 offenbart einen Kanal mit Synchronisationspuffer, der einen synchronen Datentransfer zwischen Computer und Ein-/Ausgabekanälen gewährleistet, indem ein Kanal den Signalprozessor informiert, wenn der Puffer zum Empfang neuer Daten bereit ist. Liegen momentan keine zu übertragenden Daten an, so sendet der Synchronisationspuffer selbst Pausensignale über die Datenverbindung.

Slatter R.C. et al. "Customer access to integrated services digital networks", Electrical Communication, Alcatel, Vol. 56, No. 1, 1981, Seiten 31 bis 43, offenbart eine Technik zum Reduzieren der notwendigen Bandbreite für die Übertragung von Sprachsignalen. Die Bandbreitenreduzierung wird dabei dadurch erreicht, daß in den Sprachpausen Minimalpakete, die weniger Bandbreite benötigen, über den Kanal gesendet werden.

Aus J. Martin, "Die Organisation von Datennetzen", 1972, Seiten 96 bis 110, Karl Hanser Verlag München, sind grundlegende Synchronisationsprinzipien für die Organisation von Datennetzen bekannt.

Eine Aufgabe der vorliegenden Erfindung besteht darin, eine synchrone Datenübertragung über eine Leitung zu garantieren, wobei Nutzdaten unregelmäßig über eine nicht isochrone Verbindung von der Datenverarbeitungseinrichtung an die Datenübertragungseinrichtung übertragen werden sollen und auf den Einsatz eines Pufferspeichers verzichtet werden soll.

Die Aufgabe der Erfindung wird durch ein Verfahren und eine Vorrichtung gelöst, wie sie in den unabhängigen Patentansprüchen definiert ist. Die abhängigen Ansprüche definieren bevorzugte Ausführungsformen der Erfindung.

Bei einem Ausführungsbeispiel der Erfindung werden von einer Datenverarbeitungseinrichtung an eine Datenübertragungseinrichtung neben den Nutzdaten enthaltenden Signalen auch noch Informationen über ein (oder mehrere) gegebenenfalls zu sendende Pausensignale übermittelt, damit die Datenübertragungseinrichtung leitungsseitig (oder netzseitig) einen kontinuierlichen Datenstrom senden bzw. übertragen kann, bei dem zwischen den Nutzdaten enthaltenden Signalen Pausensignale gesendet werden, welche auf den von der Datenverarbeitungseinrichtung übermittelten Informationen basieren, um so ein Abreißen des Datenstroms zu vermeiden.

Durch ein Auffüllen der Zeit zwischen den Nutzdatensignalen durch Pausensignale wird vermieden, daß im Datenstrom eine zeitliche Lücke auftritt, vielmehr wird die Sendung eines kontinuierlichen Datenstroms gewährleistet. Selbst wenn für eine gewisse Zeit keine Nutzdaten von der Datenverarbeitungseinrichtung an die Datenübertragungseinrichtung übermittelt werden, so ist diese dennoch in der Lage, weiterhin einen sinnvollen und von der Empfängerseite als sinnvoll interpretierbaren Datenstrom zu senden, indem basierend auf den von der Datenverarbeitungseinrichtung übermittelten Informationen ein Pausensignal gesendet wird. Das Senden des Pausensignals verhindert somit ein Abreißen des Datenstroms und ermöglicht es, das nächste Nutzdaten enthaltende Signal, das in der Datenübertragungseinrichtung vorliegt, ohne Zeitverzögerung zu senden, indem es an das Pausensignal angefügt oder in dieses eingefügt wird. Dadurch wird eine aufwendige Fehlerkorrektur vermieden, die etwa bei einem Abreißen des Datenstroms erforderlich wäre. Des weiteren ist es nicht erforderlich, mehrere Nutzdatensignale vorab an die Datenübertragungseinrichtung zu senden und dort zwischenzuspeichern, um einen kontinuierlichen Datenstrom zu gewährleisten. Vielmehr wird das Zwischenspeichern und damit der Zwischenspeicher in der Datenübertragungseinrichtung überflüssig, denn durch das Überbrücken eventueller Zeitlücken zwischen den Nutzdatensignalen durch ein (oder mehrere) Pausensignale kann immer dann, wenn ein neues Nutzdatensignal vorliegt, dieses sofort über die Leitung gesendet werden. Damit entfällt die aus einer Zwischenspeicherung resultierende Verzögerungszeit zwischen Erzeugung des Nutzdatensignals und dessen Sendung, wodurch somit auch die Zeitverzögerung im Stand der Technik bei bidirektionaler Kommunikation entfällt.

Es wird also, um ein Abreißen des kontinuierlichen, vorzugsweise synchronen Datenstroms zu vermeiden, solange ein Pausensignal von der Datenübertragungseinrichtung gesendet bis eine an die Datenübertragungseinrichtung gekoppelte Datenverarbeitungseinrichtung erneut Nutzdaten an die Datenübertragungseinrichtung übermittelt hat, die dann von dieser an das kontinuierlich gesendete Pausensignal angefügt beziehungsweise in dieses eingefügt werden.

In einer bevorzugten Ausführungsform werden von der Datenverarbeitungseinrichtung das oder die zur Kommunikation erforderlichen paketorientierten Protokolle abgewickelt, dabei werden die Nutzdaten in den Paketen in einen Nutzdaten-Signalblock umgewandelt, der an die Datenübertragungseinrichtung bit-transparent übermittelt wird. Diese sendet dann den Nutzdaten-Signalblock über eine Verbindungsleitung, falls kein Nutzdaten-Signalblock vorliegt, wird von ihr ein Pausensignal gesendet, um die kontinuierliche Übertragung nicht abreißen zu lassen. Dieses Pausensignal basiert dabei auf von der Datenverarbeitungseinrichtung an die Datenübertragunseinrichtung übermittelten Informationen, die beispielsweise in einem einfachen Fall das zu sendende Pausensignal selbst enthalten können. Sie können aber auch aus einem Signal bestehen, das die Sendung des Pausensignals lediglich initiiert, oder sie können beispielsweise auch detaillierte informationen darüber enthalten, wie das Pausensignal gebildet werden soll, wie das nächste Nutzdatensignal an das Pausensignal angefügt oder in dieses eingefügt werden soll, beispielsweise an welcher Stelle bzw. an welchen Stellen eine Einfügung oder Anfügung erfolgen soll oder kann.

In einer besonders bevorzugten Ausführungsform handelt es sich bei den Nutzdatensignalpaketen um HDLC-Frames, bei den Pausensignalen um HDLC-Flags oder ein konstantes Bitmuster, wobei sowohl die Nutzdaten-Signalblöcke als auch das Pausensignal von der Datenverarbeitungseinrichtung an die Datenübertragungseinrichtung übermittelt werden.

In einer vorteilhaften Ausführungsform besteht die Datenverarbeitungseinrichtung aus einem PC und die Datenübertragungsinrichtung aus einem Terminaladapter.

In einer weiteren vorteilhaften Ausführungsform handelt es sich bei der an die Datenübertragungseinrichtung angeschlossene Verbindungsleitung um eine ISDN-Verbindung.

In einer besonders vorteilhaften Ausführungsform sendet die Datenübertragungseinrichtung basierend auf den von der Datenverarbeitungsinrichtung übermittelten Informationen das Pausensignal durch periodische Wiederholung eines bestimmten Musters, bis der nächste von der Datenverarbeitungseinrichtung übermittelte Nutzdaten-Signalblock vorliegt. Liegt dieser vor, so wird er an das Pausensignal angefügt. Dadurch können zeitliche Lücken beim Eintreffen der Nutzdaten überbrückt werden, indem die Datenübertragungseinrichtung ohne Unterbrechung Pausensignale an die Leitung sendet.

In einer weiteren besonderen Ausführungsform handelt es sich bei dem Pausensignal um ein komplexes Muster, innerhalb dessen an mehreren Punkten der nächste vorliegende Nutzdaten-Signalblock eingefügt oder angefügt werden kann. Dadurch können auch komplexere Funktionalitäten mittels des erfindungsgemäßen Verfahrens beziehungsweise der Vorrichtung realisiert werden, indem die Datenverarbeitungseinrichtung der Datenübertragungseinrichtung mitteilt, wie das Pausensignal aufgebaut sein soll und wie die Nutzdaten hieran anzufügen bzw. einzufügen sind.

Gemäß einem Ausführungsbeispiel der Erfindung umfaßt das von der Datenverarbeitungseinrichtung an die Datenübertragungseinrichtung übermittelte Signal einen bit-transparenten Nutzdatensignalblock und/oder Audiodaten, insbesondere Audiodaten, die nach einem Codierungsverfahren codiert sind.

Gemäß einem weiteren Ausführungsbeispiel ist der kontinuierliche Datenstrom ein isochroner, nicht abreißender Datenstrom mit konstanter Bitrate.

Gemäß einem weiteren Ausführungsbeispiel ist die Leitung eine ISDN-Leitung, inbesondere ein ISDN-B-Kanal.

Gemäß einem weiteren Ausführungsbeispiel ist die Datenverarbeitungseinrichtung ein PC und/oder die Datenübertragungseinrichtung ein Terminaladapter.

Gemäß einem weiteren Ausführungsbeispiel werden bei den paketorientierten Übertragungsverfahren HDLC-Rahmen übertragen und/oder es handelt sich bei den paketorientierten Protokollen um eines der folgenden Protokolle: X.75-Protokoll, V.120-Protokoll.

Gemäß einem weiteren Ausführungsbeispiel führt die Datenverarbeitungseinrichtung eines oder mehrere analoge Modulationsverfahren durch, beispielsweise V17, V29, V32, V32bis, V34, V90.

Gemäß einem weiteren Ausführungsbeispiel werden zwischen der Datenverarbeitungseinrichtung und der Datenübertragungseinrichtung nur bit-transparente Daten übertragen.

Gemäß einem weiteren Ausführungsbeispiel erfolgt ein kontinuierliches Übertragen eines Pausensignals zur Erzeugung des kontinuierlichen Datenstroms durch periodische Wiederholung des Pausensignals.

Gemäß einem weiteren Ausführungsbeispiel umfassen die Informationen über das gegebenenfalls zu sendende Pausensignal das Pausensignal selbst.

Gemäß einem weiteren Ausführungsbeispiel werden von der Datenverarbeitungseinrichtung an die Datenübertragungseinrichtung Informationen darüber übermittelt, wie die nächsten von der Datenverarbeitungseinrichtung an die Datenübertragungseinrichtung übermittelten Nutzdaten in den kontinuierlichen Datenstrom einzufügen und/oder an das Pausensignal anzufügen sind.

Gemäß einem weiteren Ausführungsbeispiel ist das Pausenmuster variabel.

In einer besonders bevorzugten Ausführungsform wandelt die Datenverarbeitungseinrichtung jeweils einen vollständigen HDLC-Rahmen in eine bit-transparente Darstellung und sendet diesen an die Datenübertragungsinrichtung. Zusammen mit dem HDLC-Rahmen sendet die Datenverarbeitungseinrichtung ein Flag-Byte, das dann von der Datenübertragungseinrichtung gegebenenfalls solange wiederholt gesendet wird, bis der nächste Nutzdatenrahmen eingetroffen ist.

Die vorliegende Erfindung wird nachfolgend unter Bezugnahme auf die beiliegenden Zeichnungen erläutert. Es zeigen:
Figur 1 eine schematische Darstellung einer Vorrichtung zur Datenübertragung gemäß der vorliegenden Erfindung; und
Figur 2 eine schematische Darstellung eines Verfahrens zur Datenübertragung gemäß einem Ausführungsbeispiel der vorliegenden Erfindung.

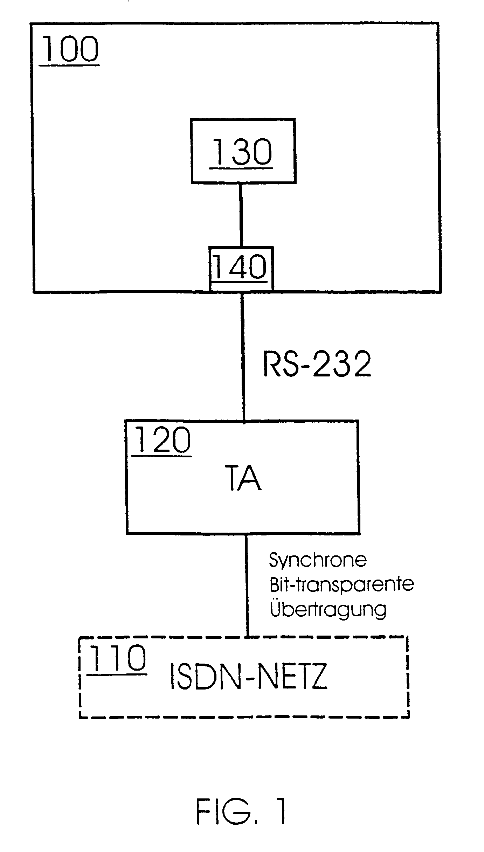

Figur 1 zeigt schematisch eine Anordnung, mittels derer das Verfahren gemäß vorliegender Erfindung realisiert wird. Der PC (100) führt ein Kommunikationsprogramm (130) aus, das mittels einer Schnittstelle (140) über eine RS-232-Verbindung (oder eine beliebige andere Verbindung, z. B. USB, Ethernet, etc.) an den Terminaladapter (120) gekoppelt ist. Dieser wiederum ist mittels einer Leitung an ein ISDN-Netz (110) gekoppelt und führt eine synchrone bzw. isochrone bit-transparente Übertragung aus. Der Adapter sendet hierfür einen Datenstrom, der einem ISDN-B-Kanal entspricht.

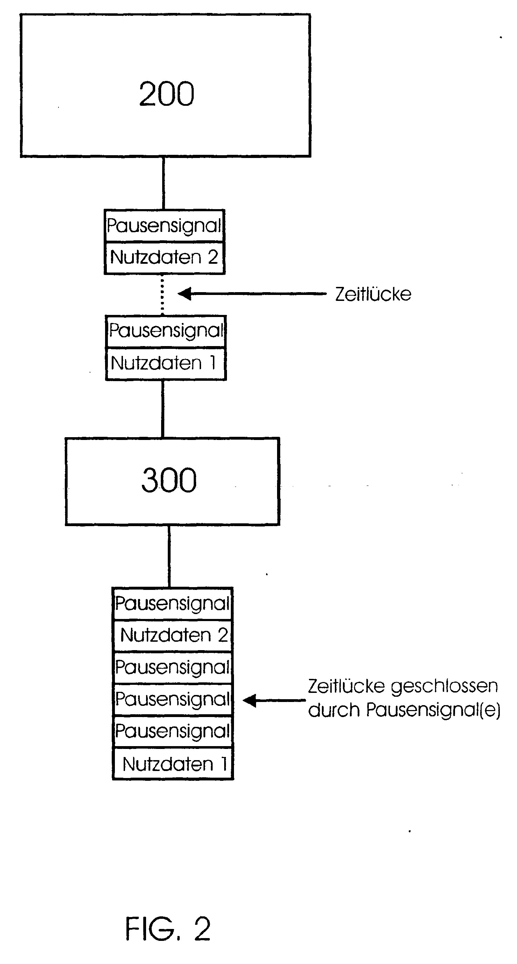

Der Ablauf des erfindungsgemäßen Verfahrens wird nun genau unter Bezugnahme auf Figur 2 beschrieben.

Der PC (200) führt die paketorientierten Protokolle für eine ISDN-Übertragung durch, er wandelt die Pakete, welche unter anderem Nutzdaten enthalten, in bit-transparente Nutzdaten-Signalblöcke um und übermittelt diese an den Terminaladapter (300).

Im Anschluß an einen ersten Nutzdaten-Signalblock übermittelt der PC ein Pausensignal an den Terminaladapter (300). Der Terminaladapter (300) nimmt den ersten Nutzdaten-Signalblock mit den Nutzdaten 1 und das sich daran anschließende Pausensignal auf.

Tritt nun nach Übermittlung des Pausensignals von dem PC an den Terminaladapter eine zeitliche Lücke auf, so wird diese Lücke durch den Terminaladapter (300) geschlossen, indem er ISDN-seitig (leitungsseitig) so lange das Pausensignal isochron und bit-transparent überträgt, bis der nächste Nutzdaten-Signalblock, welcher die Nutzdaten 2 enthält, beim Terminaladapter eingetroffen ist.

Es wird also wiederholt ein Pausensignal gesendet, und zwar so lange, bis ein neuer zu sendender Nutzdaten-Signalblock vorliegt. Dadurch wird es ermöglicht, daß die ISDN-seitige, synchrone, bit-transparente Kommunikation nicht abreißt, es wird also leitungsseitig dadurch ein kontinuierlicher, nicht abreißender Datenstrom erzeugt, so daß keine diesbezüglichen Fehler oder Fehlermeldungen auftreten können.

Der Terminaladapter ist so konfiguriert, daß er das Pausensignal so lange sendet, bis ein neuer Nutzdaten-Signalblock (Nutzdaten 2 in Figur 2) vorliegt. Dabei handelt es sich beim vorliegenden Ausführungsbeispiel bei dem Pausensignal um ein HDLC-Flag, bei den Nutzdaten um einen HDLC-Rahmen, welche der Terminaladapter zunächst von dem PC empfängt und dann ISDN-seitig über die Leitung synchron und bit-transparent überträgt.

Der Terminaladapter entspricht dabei im wesentlichen den bereits bekannten Adaptern, er enthält jedoch zusätzlich die Funktionalität, daß ein Pausensignal ständig gesendet wird, während überprüft wird, ob erneut Nutzdaten eingetroffen sind. Wird diese Frage bejaht, so werden anstelle des Pausensignals die Nutzdaten gesendet bzw. in den kontinuierlichen Datenstrom eingefügt oder an das Pausensignal angehängt. Eine diesbezügliche Modifikation des Terminaladapters kann auf einfache Weise hardwaremäßig oder auch durch Modifikation der die Funktionalitäten des Adapters steuernden und in einem ROM gespeicherten Software realisiert werden.

Gemäß einem weiteren Ausführungsbeispiel wird nicht das Pausensignal selbst vom PC an den Terminaladapter übermittelt, sondern lediglich ein Signal, welches diesen veranlaßt, ein Pausensignal so lange zu senden, bis erneut Nutzdaten eingetroffen sind.

In einem weiteren Ausführungsbeispiel werden ganz allgemein Informationen über das gegebenenfalls zu sendende Pausensignal von dem PC an den Adapter übermittelt, wobei dieser dann basierend auf diesen Informationen eventuell auftretende Zeitlücken zwischen den Nutzdatensignalen leitungsseitig durch ein oder mehrere Pausensignale auffüllt.

In einem weiteren Ausführungsbeispiel ist das vom Terminaladapter gesendete Pausensignal abhängig vom von dem PC an den Adapter übermittelten, die Sendung des Pausensignals initiierenden Signal, wobei das Pausensignal in Abhängigkeit von diesem Initiierungssignal variieren kann. Dabei kann das Pausensignal vom Adapter selbst erzeugt werden, es kann aber auch vom PC an den Adapter übermittelt oder durch den Adapter in Reaktion auf das Initiierungssignal vom PC angefordert werden.

Gemäß einem weiteren Ausführungsbeispiel kann das Pausensignal eine komplexe Form annehmen, etwa die-Form eines längeren Bitmusters, wobei dieses Bitmuster selbst wiederum variabel sein kann und gegebenenfalls mehrere Einsetzpunkte hat, an denen neu vorliegenden Nutzdaten in clas Pausensignal eingefügt beziehungsweise an dieses angehängt werden können.

Ein weiteres bevorzugtes Ausführungsbeispiel beinhaltet ein Verfahren zum Empfangen von Daten, die durch das bisher geschilderte Übertragungsverfahren über die Leitung übertragen werden. Das Empfangsverfahren umfaßt dabei das Empfangen des kontinuierlichen Datenstroms durch eine weitere Datenübertragungseinrichtung und das Weiterleiten eines die Nutzdaten des Datenstroms enthaltenden Signals von der Datenübertragungseinrichtung an eine Datenverarbeitungseinrichtung.

Besonders zweckmäßig ist es dabei, daß das Verfahren zum Empfangen der übertragenen Daten in einer sinngemäß umgekehrten empfängerseitigen Ausführung der geschilderten Übertragungsverfahren besteht.

Für den Fachmann ergeben sich leicht weitere Modifikationen in naheliegender Weise. Beispielsweise kann die beschriebene Vorrichtung und das beschriebene Verfahren nicht nur für eine ISDN-Kommunikation verwendet werden, es kann vielmehr für alle Kommunikationsverfahren und Kommunikationsstandards eingesetzt werden, bei denen leitungsseitig beziehungsweise netzseitig eine kontinuierliche, vorzugsweise eine synchrone oder isochrone bit-transparente Übertragung mittels der Datenübertragungseinrichtung erfolgen soll, um den Datenstrom nicht abreißen zu lassen.

Die Erfindung kann beispielsweise realisiert werden durch ein auf einem Computer ablaufendes Verfahren, durch ein Übertragungsverfahren, welches einen Computer und eine Leitung über einen Adapter verbindet, oder auch durch ein Computerprogramm, das beispielsweise auf einem Datenträger gespeichert ist, also ein Computerprogramm-Produkt, welches einen Computer veranlaßt ein Verfahren gemäß der vorliegenden Erfindung auszuführen.

## Patentansprüche

1. Auf einer Datenverarbeitungseinrichtung (100) ablaufendes Verfahren zum Übertragen von Daten über eine Leitung (110), wobei die Daten von der Datenverarbeitungseinrichtung an eine an die Leitung (110) angeschlossene Datenübertragungseinrichtung (120) über eine nicht isochrone Verbindung übermittelt werden und das Verfahren folgende Schritte umfaßt:
Übermittlung eines Nutzdaten enthaltenden Signals sowie von Informationen über ein gegebenenfalls von der Datenübertragungseinrichtung zu sendendes Pausensignal von der Datenverarbeitungseinrichtung (100) an die Datenübertragungseinrichtung, um **dadurch** die Datenübertragungseinrichtung in die Lage zu versetzen, einen kontinuierlichen Datenstrom über die Leitung zu übertragen, indem zur Vermeidung eines Abreißens des kontinuierlichen Datenstroms durch die Datenübertragungseinrichtung ein auf den von der Datenverarbeitungseinrichtung übermittelten Informationen basierendes Pausensignal zwischen den Nutzdaten enthaltenden Signalen übertragen wird,
**dadurch gekennzeichnet, daß** das Übertragen des Pausensignals in Reaktion auf ein von der Datenverarbeitungseinrichtung an die Datenübertragungseinrichtung übermitteltes Signal erfolgt, das sich an einen Nutzdaten-Signalblock anschließt.

2. Verfahren zum Übertragen von Daten über eine an eine Leitung (110) angeschlossene Datenübertragungseinrichtung (120), welches folgende Schritte umfaßt:
Übermittlung eines Nutzdaten enthaltenden Signals sowie von Informationen über ein gegebenenfalls von der Datenübertragungseinrichtung zu sendendes Pausensignal von einer Datenverarbeitungseinrichtung (100) an die Datenübertragungseinrichtung (120) über eine nicht isochrone Verbindung;
Übertragen eines kontinuierlichen Datenstromes durch die Datenübertragungseinrichtung über die Leitung (110) wobei der kontinuierliche Datenstrom von der Datenverarbeitungseinrichtung an die Datenübertragungseinrichtung übermittelte Nutzdaten enthaltende Signale aufweist und zur Vermeidung eines Abreißens des kontinuierlichen Datenstroms durch die
Datenübertragungseinrichtung ein auf den von der Datenverarbeitungseinrichtung übermittelten Informationen basierendes Pausensignal zwischen den Nutzdaten enthaltenden Signalen übertragen wird,
**dadurch gekennzeichnet, daß** das Übertragen des Pausensignals in Reaktion auf ein von der Datenverarbeitungseinrichtung an die Datenübertragungseinrichtung übermitteltes Signal erfolgt, das sich an einen Nutzdaten-Signalblock anschließt.

3. Verfahren nach einem der vorhergehenden Ansprüche, **dadurch gekennzeichnet, daß** eines oder mehrere paketorientierte Übertragungsverfahren und/oder ein oder mehrere paketorientierte Übertragungsprotokolle durch die Datenverarbeitungseinrichtung abgewickelt werden, wobei die Datenverarbeitungseinrichtung basierend auf der Abwicklung des bzw. der paketorientierten Übertragungsverfahren/Protokolle eine Nutzdateneinheit umfassende Dateneinheit zur Übermittlung an die Datenübertragungseinrichtung in einen bit-transparenten Signalblock umwandelt.

4. Verfahren nach einem der vorhergehenden Ansprüche, **dadurch gekennzeichnet, daß** als Pausensignal ein bestimmtes Bit-Muster, insbesondere HDLC-Flags oder eine konstante Bit-Folge, übertragen wird.

5. Verfahren nach einem der vorhergehenden Ansprüche, **dadurch gekennzeichnet, daß** als Pausensignal ein Signalmuster verwendet wird, bei dem an mehreren Punkten des Musters die nächste vorliegende Nutzdateneinheit angefügt und/oder eingefügt werden kann.

6. Verfahren zum Empfangen von nach einem Verfahren gemäß einem der Ansprüche 1 bis 5 übertragenen Daten, **dadurch gekennzeichnet, daß** das Empfangsverfahren umfaßt:
Empfangen des kontinuierlichen Datenstroms durch eine Datenübertragungseinrichtung;
Weiterleitung eines die Nutzdaten des Datenstroms enthaltenden Signals von der Datenübertragungseinrichtung an eine Datenverarbeitungseinrichtung.

7. Verfahren nach Anspruch 6, **dadurch gekennzeichnet, daß** es in einer sinngemäß umgekehrten empfängerseitigen Ausführung eines Verfahrens gemäß einem der Ansprüche 1 bis 5 besteht.

8. Datenübertragungsvorrichtung zum Anschluß an eine Datenverarbeitungseinrichtung (100), welche ein Nutzdaten enthaltendes Signal an die Datenübertragungseinrichtung sowie Informationen über ein gegebenenfalls von der Datenübertragungseinrichtung zu übertragendes Pausensignal an die Datenübertragungseinrichtung übermittelt, sowie zum Anschluß an eine Leitung, **dadurch gekennzeichnet, daß** die Datenübertragungsvorrichtung aufweist:
eine Einrichtung zum Übertragen eines kontinuierlichen Datenstromes über die Leitung, wobei der kontinuierliche Datenstrom von der Datenverarbeitungseinrichtung an die Datenübertragungseinrichtung übermittelte Nutzdaten enthaltende Signale aufweist und die Einrichtung so ausgebildet ist, daß zur Vermeidung eines Abreißens des kontinuierlichen Datenstroms durch die Einrichtung ein auf den von der Datenverarbeitungseinrichtung übermittelten Informationen basierendes Pausensignal zwischen den Nutzdaten enthaltenden Signalen übertragen wird.

9. Datenübertragungseinrichtung nach Anspruch 8, **dadurch gekennzeichnet, daß** sie ferner aufweist:
eine Einrichtung zur Durchführung eines Verfahrens gemäß einem der Ansprüche 1 bis 6.

10. Datenübertragungseinrichtung nach Anspruch 8 oder 9, **dadurch gekennzeichnet, daß** die Datenübertragungseinrichtung integraler Bestandteil der Datenverarbeitungseinrichtung ist.

## Claims

1. A method running on a data processing apparatus (100) for transmitting data over a line (110), whereas the data are transmitted from the data processing apparatus to a data transmission means (120) connected to the line (110) via an isochronous connection and the method comprising the following steps:
transmitting a signal containing payload data as well as information about a pause signal which may be sent from the data processing means to the data transmission means to enable the data transmission means to transmit a continuous data stream over the line, by transmitting for avoiding the cut-off of a continuous data stream through the data processing means a pause signal which is based on information transmitted by the data processing means, **characterized in that** the transmission of the pause signal is carried out in response to a signal transmitted from the data processing means to the data transmission means which follows a payload signal block.

2. A method for transmitting data over a data transmission means (120) connected to a line (110), comprising the following steps:
transmitting a signal containing payload data from a data processing means (100) to the data transmission means (120) as well as information about a pause signal which may have to be transmitted from the data transmission means over an isochronous connection;
transmitting a continuous data stream through the data transmission means over the line (110), whereas the continuous data steam contains signals which include payload data transmitted from the data processing means to the data transmission means, and whereas for avoiding the cut-off of a continuous data stream a pause signal which is based on information transmitted by the data processing means is transmitted between the payload containing signals by the data transmission means over a non-isochronous connection, **characterized in that**
the transmission of the pause signal is carried out in response to a signal transmitted from the data processing means to the data transmission means following a payload signal block.

3. The method of one of the preceding claims, **characterized in that** one or more packet-oriented transmission methods and/or one or more packet-oriented transmission protocols are carried out by the data processing means, whereas the data processing means converts based on the execution or the packet-oriented transmission method/protocols a payload data unit containing data unit for transmitting it to the data transmission means into a bit-transparent signal block.

4. The method of one of the preceding claims, **characterized in that** as a pause signal a certain bit pattern, particularly HDLC flags or a constant bit sequence are transmitted.

5. The method of one of the preceding claims, **characterized in that** as a pause signal a signal pattern is used where on a plurality of locations of the pattern the next present payload data unit can be appended and/or inserted.

6. A method for receiving data which have been transmitted according to one of claims 1 to 5, **characterized in that** the receiving method comprises:
receiving the continuous data stream through a data transmission means;
forwarding a signal containing the payload data of the data stream from the data transmission means to a data processing means.

7. The method of claim 6, **characterized in that** it consists in a reciprocally on the side of the receiver executed method according to one of claims 1 to 5.

8. Data transmission means for being connected to a data processing means (100) which transmits a signal containing payload data to the data transmission means as well as information about a pause signal which may have to be transmitted by the data transmission means, further for being connected to a line, **characterized in that** the data transmission means comprises:
a means for transmitting a continuous data stream through the line, whereas the continuous data stream contains signal including payload data transmitted from the data processing means to the data transmission means and the means being adapted to transmit a pause signal between the payload containing signals which is based on the data transmitted by the data processing means for avoiding the cut-off of a continuous data stream.

9. The data processing means of claim 8, **characterized by** further comprising:
a means for carrying out a method according to one of claims 1 to 6.

10. The data processing means according to claim 8 or 9, **characterized in that** the data transmission means is an integral component of the data processing means.

## Revendications

1. Procédé se déroulant dans un dispositif de traitement de données (100) pour transmettre des données par l'intermédiaire d'une ligne (110), les données étant transférées par l'intermédiaire d'une liaison non isochrone par le dispositif de traitement de données à un dispositif de transmission des données (120) relié à la ligne (110) et le procédé comprenant les étapes suivantes consistant à :
transférer un signal contenant des données utiles ainsi que des informations relatives à un signal de pause à envoyer le cas échéant par le dispositif de transmission de données depuis le dispositif de traitement des données (100) au dispositif de transmission de données, pour mettre ainsi le dispositif de transmission de données en position de transmettre un flux de données continu par l'intermédiaire de la ligne, tandis que, pour éviter une rupture du flux de données continu, un signal de pause se basant sur les informations transférées par le dispositif de traitement des données est transmis par le dispositif de transmission de données par l'intermédiaire d'une liaison non isochrone dans l'intervalle entre les signaux contenant des données utiles.

2. Procédé pour transmettre des données par l'intermédiaire d'un dispositif de transmission de données (120) relié à une ligne (110), qui comprend les étapes suivantes consistant à :
transférer un signal contenant des données utiles ainsi que des informations relatives à un signal de pause à envoyer le cas échéant par le dispositif de transmission de données depuis un dispositif de traitement de données (100) au dispositif de transmission de données (120) par l'intermédiaire d'une liaison non isochrone ;
transmettre au moyen du dispositif de transmission de données un flux de données continu par l'intermédiaire de la ligne (110), le flux de données continu présentant des signaux contenant des données utiles transférées par le dispositif de traitement de données au dispositif de transmission de données et, en vue d'éviter une rupture du flux de données continu,
un signal de pause se basant sur les informations transférées par le dispositif de traitement de données étant transmis par le dispositif de transmission de données par l'intermédiaire d'une liaison non isochrone dans l'intervalle entre les signaux contenant des données utiles.

3. Procédé selon l'une quelconque des revendications précédentes, **caractérisé en ce qu'**un ou plusieurs procédés de transmission en mode paquets et/ou un ou plusieurs protocoles de transmission en mode paquets sont mis en oeuvre par le dispositif de traitement de données, le dispositif de traitement de données transformant, sur la base de la mise en oeuvre du procédé de transmission en mode paquets et/ou des protocoles de transmission en mode paquets, une unité de données comprenant une unité de données utiles en un bloc de signal en mode en transparence de bits en vue de son transfert au dispositif de transmission de données ;
**caractérisé en ce que** la transmission du signal de pause est effectuée en réponse à un signal transféré par le dispositif de traitement de données au dispositif de transmission de données, lequel signal est annexé à un bloc de signal de données utiles.

4. Procédé selon l'une quelconque des revendications précédentes, **caractérisé en ce qu'**un modèle binaire donné, en particulier des drapeaux HDLC ou une suite de bits constante est transmise en tant que signal de pause.

5. Procédé selon l'une quelconque des revendications précédentes, **caractérisé en ce qu'**un modèle de signal est employé en tant que signal de pause, dans lequel la prochaine unité de données utiles se présentant est adjointe et/ou introduite en plusieurs emplacements du modèle.

6. Procédé pour recevoir des données transmises d'après un procédé selon l'une quelconque des revendications 1 à 5, **caractérisé en ce que** le procédé de réception comprend :
la réception du flux de données continu par un dispositif de transmission de données ;
la retransmission d'un signal contenant les données utiles du flux de données depuis le dispositif de transmission de données à un dispositif de traitement de données.

7. Procédé selon la revendication 6, **caractérisé en ce qu'**il consiste en une réalisation s'effectuant côté réception, dans un esprit contraire, d'un procédé selon l'une quelconque des revendications 1 à 5.

8. Dispositif de transmission de données pour sa connexion avec un dispositif de traitement de données (100), qui transfère un signal contenant des données utiles au dispositif de transmission de données, ainsi que des informations relatives à un signal de pause à transmettre le cas échéant par le dispositif de transmission de données au dispositif de transmission de données, ainsi que pour sa connexion avec une ligne, **caractérisé en ce que** le dispositif de transmission de données présente :
un dispositif pour transmettre un flux de données continu par l'intermédiaire d'une ligne, le flux de données continu présentant des signaux contenant des données utiles transférées par le dispositif de traitement de données au dispositif de transmission de données et le dispositif étant conçu de telle manière que, en vue d'éviter une rupture du flux de données continu, un signal de pause se basant sur les informations transférées par le dispositif de traitement de données est transmis par le dispositif dans l'intervalle entre les signaux contenant des données utiles.

9. Dispositif de transmission de données selon la revendication 8, **caractérisé en ce qu'**il comprend en outre :
un dispositif pour exécuter un procédé selon l'une quelconque des revendications 1 à 6.

10. Dispositif de transmission de données selon la revendication 8 ou la revendication 9, **caractérisé en ce que** le dispositif de transmission de données fait partie intégrante du dispositif de traitement de données.
